# EUROPEAN PATENT APPLICATION

(11) **EP 4 844 906 A1**
(43) Date of publication of application: **25.11.2026**
(21) Application number: 26165989.0
(22) Date of filing: 19.03.2026
(51) Int. Cl.: H01M 50/15, H01M 50/176, H01M 50/184, H01M 50/188, H01M 50/528, H01M 50/533, H01M 50/55, H01M 50/553

(54) **END COVER ASSEMBLY, BATTERY CELL, ENERGY-STORAGE APPARATUS, AND POWER-CONSUMING DEVICE**

(30) Priority: 23.05.2025 CN 202510677746; 23.05.2025 CN 202521036124 U
(71) Applicant: Xiamen Hithium Energy Storage Technology Co., Ltd., Xiamen, Fujian 361100 (CN)
(72) Inventor: LI, Wenbo, Xiamen, Fujian 361100 (CN); WANG, Changhao, Xiamen, Fujian 361100 (CN)
(74) Representative: Santarelli

(57) **Abstract**

Disclosed are an end cover assembly, a battery cell, an energy-storage apparatus, and a power-consuming device. The end cover assembly includes an end cover, an upper plastic member, and a terminal post. The end cover defines a terminal-post through-hole. A body of the upper plastic member defines a first mounting through-hole, and a protruding portion defines a second mounting through-hole. An inner wall surface of the second mounting through-hole includes a first anti-rotation surface. An outer peripheral surface of the body includes a positioning surface. An outer peripheral surface of a cylinder of the terminal post includes a second anti-rotation surface. The second anti-rotation surface and the first anti-rotation surface are in contact, and the second anti-rotation surface and the first anti-rotation surface restrain in a circumferential direction of the terminal post. The protrusion of the terminal post is inserted through the first mounting through-hole.

## Description

### TECHNICAL FIELD

The present disclosure relates to the field of energy-storage technologies, and in particular, to an end cover assembly, a battery cell, an energy-storage apparatus, and a power-consuming device.

### BACKGROUND

A secondary battery, also known as a rechargeable battery or a storage battery, refers to a battery that can be recharged to reactivate active materials for continued use after discharging. In a battery module, terminal posts of two adjacent battery cells are generally electronically connected via an electrical connecting piece, thereby implementing series-parallel connection of the battery cells. When the electrical connecting piece and the terminal post are welded poorly, the electrical connecting piece needs to be disassembled. However, when the electrical connecting piece is disassembled, the terminal post is easily caused to twist, thereby affecting sealing of the terminal post and stability of an electrical connection between the terminal post and an electrode assembly.

### SUMMARY

The present disclosure provides an end cover assembly, a battery cell, an energy-storage apparatus, and a power-consuming device, which can reduce or even prevent twisting of a terminal post when the terminal post is subjected to an external force, prevent sealing failure of the terminal post, and improve stability of an electrical connection between the terminal post and an electrode assembly.

In a first aspect, an end cover assembly is provided. The end cover assembly includes an end cover, an upper plastic member, and a terminal post. The end cover defines a terminal-post through-hole, and the terminal-post through-hole extends through a top surface of the end cover and a bottom surface of the end cover. The upper plastic member includes a body and a protruding portion. The body defines a first mounting through-hole, and the protruding portion defines a second mounting through-hole. The protruding portion and the body are connected in a thickness direction of the end cover assembly, and the second mounting through-hole is in communication with the first mounting through-hole. An inner wall surface of the second mounting through-hole includes a first anti-rotation surface. An outer peripheral surface of the body includes a positioning surface, and the positioning surface is a planar surface. The upper plastic member is disposed on the end cover, the protruding portion is inserted through the terminal-post through-hole, and the body is disposed on the top surface of the end cover. The terminal post includes a cylinder and a protrusion, and the cylinder and the protrusion are connected in the thickness direction of the end cover assembly. An outer peripheral surface of the cylinder includes a second anti-rotation surface. The terminal post is mounted in the upper plastic member. The protrusion is inserted through the first mounting through-hole, and the cylinder is inserted through the second mounting through-hole. The second anti-rotation surface and the first anti-rotation surface are in contact with each other, and the second anti-rotation surface and the first anti-rotation surface restrain in a circumferential direction of the terminal post.

In a possible embodiment, the positioning surface is implemented as two positioning surfaces, and the two positioning surfaces are parallel and opposite to each other. The outer peripheral surface of the body further includes two connecting surfaces, the two connecting surfaces each are a curved surface, and the two connecting surfaces are disposed opposite to each other and each are connected between the two positioning surfaces.

In a possible embodiment, the first anti-rotation surface and the second anti-rotation surface each are a planar surface, and the first anti-rotation surface and the second anti-rotation surface are disposed in parallel with each other.

In a possible embodiment, the first anti-rotation surface is implemented as multiple first anti-rotation surfaces, and the multiple first anti-rotation surfaces are sequentially disposed and are connected end to end to form an inner wall of the second mounting through-hole. The second anti-rotation surface is implemented as multiple second anti-rotation surfaces, and the multiple second anti-rotation surfaces are sequentially disposed and are connected end to end to form an outer periphery of the cylinder. The multiple second anti-rotation surfaces are disposed in one-to-one correspondence with the multiple first anti-rotation surfaces, and each of the multiple second anti-rotation surfaces is disposed in parallel with and in contact with a corresponding first anti-rotation surface.

In a possible embodiment, a contour of the inner wall of the second mounting through-hole is a regular hexagon, a contour of the outer peripheral surface of the cylinder is a regular hexagon, and the contour of the outer peripheral surface of the cylinder is consistent with the contour of the inner wall of the second mounting through-hole.

In a possible embodiment, an inner wall surface of the terminal-post through-hole includes a third anti-rotation surface, and the third anti-rotation surface is a planar surface. An outer peripheral surface of the protruding portion includes a fourth anti-rotation surface, and the fourth anti-rotation surface is a planar surface. The fourth anti-rotation surface is arranged parallel to the third anti-rotation surface and is in contact with the third anti-rotation surface.

In a possible embodiment, the third anti-rotation surface is implemented as multiple third anti-rotation surfaces, and the multiple third anti-rotation surfaces are sequentially disposed and are connected end to end to form an inner wall of the terminal-post through-hole. The fourth anti-rotation surface is implemented as multiple fourth anti-rotation surfaces, and the multiple fourth anti-rotation surfaces are sequentially disposed and are connected end to end to form an outer periphery of the protruding portion and are connected end to end. The multiple fourth anti-rotation surfaces are disposed in one-to-one correspondence with the multiple third anti-rotation surfaces, and each of the fourth anti-rotation surfaces is disposed in parallel with and in contact with a corresponding third anti-rotation surface.

In a possible embodiment, the end cover assembly further includes a lower plastic member, the lower plastic member includes a terminal-post hole, and the terminal-post hole extends through the lower plastic member in a thickness direction of the lower plastic member. An inner wall surface of the terminal-post hole includes a fifth anti-rotation surface, and the fifth anti-rotation surface is a planar surface. The lower plastic member is disposed at a bottom of the end cover and fixedly connected to the end cover, and the terminal-post hole is arranged opposite to the terminal-post through-hole. The protruding portion is inserted through the terminal-post through-hole and the terminal-post hole, and the fourth anti-rotation surface is parallel to and opposite to the fifth anti-rotation surface.

In a possible embodiment, the end cover assembly further includes a sealing ring. The sealing ring is sleeved on an outer periphery of the protruding portion and disposed in the terminal-post hole, and the sealing ring is sealed between the protruding portion and the lower plastic member.

In a second aspect, a battery cell is provided. The battery cell includes a housing, an electrode assembly, a connector, and an end cover assembly. The end cover assembly includes an end cover, an upper plastic member, and a terminal post. The end cover defines a terminal-post through-hole, and the terminal-post through-hole extends through a top surface of the end cover and a bottom surface of the end cover. The upper plastic member includes a body and a protruding portion. The body defines a first mounting through-hole, and the protruding portion defines a second mounting through-hole. The protruding portion and the body are connected in a thickness direction of the end cover assembly, and the second mounting through-hole is in communication with the first mounting through-hole. An inner wall surface of the second mounting through-hole includes a first anti-rotation surface. An outer peripheral surface of the body includes a positioning surface, and the positioning surface is a planar surface. The upper plastic member is disposed on the end cover, the protruding portion is inserted through the terminal-post through-hole, and the body is disposed on the top surface of the end cover. The terminal post includes a cylinder and a protrusion, and the cylinder and the protrusion are connected in the thickness direction of the end cover assembly. An outer peripheral surface of the cylinder includes a second anti-rotation surface. The terminal post is mounted in the upper plastic member. The protrusion is inserted through the first mounting through-hole, and the cylinder is inserted through the second mounting through-hole. The second anti-rotation surface and the first anti-rotation surface are in contact with each other, and the second anti-rotation surface and the first anti-rotation surface restrain in a circumferential direction of the terminal post. The housing defines an opening and an accommodating cavity, and the accommodating cavity is in communication with the opening. The electrode assembly is disposed in the accommodating cavity, and the end cover assembly covers the opening and is fixedly connected to the housing. The connector is electrically connected between the terminal post and the electrode assembly.

In a possible embodiment, the connector includes a first connecting portion and a second connecting portion, and the first connecting portion is connected to the second connecting portion at an angle; the first connecting portion defines a first connecting hole, and the first connecting hole extends through the first connecting portion in a thickness direction of the first connecting portion. The terminal post further includes a flange, and the flange is connected to one side of the cylinder facing away from the protrusion. The first connecting portion is disposed at a bottom of the end cover, the flange is inserted through the first connecting hole, and the flange is in contact with an inner wall of the first connecting hole. The second connecting portion is electrically connected to the electrode assembly.

In a possible embodiment, the first connecting portion is welded to the flange.

In a possible embodiment, the first connecting portion defines a limiting groove at a surface of the first connecting portion facing towards the end cover, and the limiting groove is defined around an outer periphery of the first connecting hole. A side wall surface of the limiting groove includes a sixth anti-rotation surface, and the sixth anti-rotation surface is a planar surface. The protruding portion is at least partially disposed in the limiting groove, and a fourth anti-rotation surface disposed on an outer periphery of the protruding portion is parallel to and in contact with the sixth anti-rotation surface.

In a third aspect, an energy-storage apparatus is provided. The energy-storage apparatus includes an electrical connecting piece and at least two battery cells. The battery cell includes a housing, an electrode assembly, a connector, and an end cover assembly. The end cover assembly includes an end cover, an upper plastic member, and a terminal post. The end cover defines a terminal-post through-hole, and the terminal-post through-hole extends through a top surface of the end cover and a bottom surface of the end cover. The upper plastic member includes a body and a protruding portion. The body defines a first mounting through-hole, and the protruding portion defines a second mounting through-hole. The protruding portion and the body are connected in a thickness direction of the end cover assembly, and the second mounting through-hole is in communication with the first mounting through-hole. An inner wall surface of the second mounting through-hole includes a first anti-rotation surface. An outer peripheral surface of the body includes a positioning surface, and the positioning surface is a planar surface. The upper plastic member is disposed on the end cover, the protruding portion is inserted through the terminal-post through-hole, and the body is disposed on the top surface of the end cover. The terminal post includes a cylinder and a protrusion, and the cylinder and the protrusion are connected in the thickness direction of the end cover assembly. An outer peripheral surface of the cylinder includes a second anti-rotation surface. The terminal post is mounted in the upper plastic member. The protrusion is inserted through the first mounting through-hole, and the cylinder is inserted through the second mounting through-hole. The second anti-rotation surface and the first anti-rotation surface are in contact with each other, and the second anti-rotation surface and the first anti-rotation surface restrain in a circumferential direction of the terminal post. The housing defines an opening and an accommodating cavity, and the accommodating cavity is in communication with the opening. The electrode assembly is disposed in the accommodating cavity, and the end cover assembly covers the opening and is fixedly connected to the housing. The connector is electrically connected between the terminal post and the electrode assembly. The at least two battery cells are arranged side by side, and the electrical connecting piece is electrically connected between terminal posts of two adjacent battery cells.

In a possible embodiment, at least one edge of the electrical connecting piece is flush with the positioning surface.

In a fourth aspect, a power-consuming device is provided. The power-consuming device includes the energy-storage apparatus. The energy-storage apparatus is configured to supply power to the power-consuming device.

In summary, in the end cover assembly provided in the present disclosure, the terminal post has the second anti-rotation surface, and the upper plastic member has the first anti-rotation surface matching with the second anti-rotation surface, so that the second anti-rotation surface can prevent the terminal post from rotating relative to the upper plastic member. In this way, connection stability between the terminal post and the upper plastic member can be improved, and a torsion force between the terminal post and the upper plastic member can be increased, so as to reduce or even prevent twisting of the terminal post relative to the upper plastic member when the terminal post is subjected to an external force, and avoid sealing failure of the terminal post. Furthermore, in the end cover assembly provided in the present disclosure, the electrical connecting piece can be positioned by providing the positioning surface on the outer peripheral surface of the upper plastic member, thereby ensuring a connection angle and a connection position of the electrical connecting piece, and improving a connection yield rate of the electrical connecting piece and the terminal post.

### BRIEF DESCRIPTION OF THE DRAWINGS

To describe technical solutions of the present disclosure more clearly, the following briefly introduces accompanying drawings required for describing embodiments. Apparently, the accompanying drawings in the following description show merely some embodiments of the present disclosure, and a person of ordinary skill in the art may still derive other drawings from these accompanying drawings without creative efforts.
FIG. 1 is an application scenario diagram of a power-consuming device according to an embodiment of the present disclosure.
FIG. 2 is a schematic structural diagram of an energy-storage apparatus according to an embodiment of the present disclosure.
FIG. 3 is a schematic structural diagram of a battery cell in the energy-storage apparatus illustrated in FIG. 2.
FIG. 4 is an exploded structural diagram of the battery cell illustrated in FIG. 3.
FIG. 5 is a schematic structural diagram illustrating part of the battery cell illustrated in FIG. 2.
FIG. 6 is a partial exploded schematic structural diagram of the battery cell illustrated in FIG. 5.
FIG. 7 is a partial sectional schematic structural diagram of the battery cell illustrated in FIG. 5 taken along the A-A direction.
FIG. 8 is a schematic structural diagram of a first terminal post in the battery cell illustrated in FIG. 6.
FIG. 9 is a schematic structural diagram of the first terminal post illustrated in FIG. 8, viewed from another direction.
FIG. 10 is a schematic structural diagram of a first upper plastic member in the battery cell illustrated in FIG. 6.
FIG. 11 is a schematic structural diagram of the first upper plastic member illustrated in FIG. 10, viewed from another direction.
FIG. 12 is a schematic structural diagram illustrating part of an end cover in the battery cell illustrated in FIG. 6.
FIG. 13 is a schematic structural diagram of a lower plastic member in the battery cell illustrated in FIG. 6.
FIG. 14 is a schematic structural diagram of a first connector in the battery cell illustrated in FIG. 6.
FIG. 15 is a schematic structural diagram illustrating part of the battery cell illustrated in FIG. 5, viewed from another direction.

Reference signs: energy-storage system 1000; electric energy conversion device 300; wind energy conversion device 310; first user load 320; energy-storage cabinet 330; energy-storage apparatus 200; battery cell 100; electrical connecting piece 210; first electrical connecting piece 210a; second electrical connecting piece 210b; third electrical connecting piece 210c; first battery cell 100a; second battery cell 100b; third battery cell 100c; fourth battery cell 100d; housing 50; accommodating cavity 51; opening 52; end cover assembly 1; end cover 10; top surface 11; bottom surface 12; terminal-post through-hole 13; first terminal-post through-hole 13a; second terminal-post through-hole 13b; first explosion-proof hole 14; first liquid injection hole 15; third anti-rotation surface 131; upper plastic member 20; first upper plastic member 20a; second upper plastic member 20b; through hole 201; body 21; first surface 211; second surface 212; second outer peripheral surface 213; second inner peripheral surface 214; first mounting through-hole 215; positioning surface 2131; connecting surface 2132; protruding portion 22; second mounting through-hole 221; third inner peripheral surface 222; third outer peripheral surface 223; first anti-rotation surface 224; fourth anti-rotation surface 225; limiting step 216; lower plastic member 30; terminal-post hole 31; first terminal-post hole 31a; second terminal-post hole 31b; fifth anti-rotation surface 311; second explosion-proof hole 32; second liquid injection hole 33; flow guide hole 34; terminal post 40; first terminal post 40a; second terminal post 40b; cylinder 41; protrusion 42; flange 43; first outer peripheral surface 411; second anti-rotation surface 412; limiting portion 421; electrode assembly 60; connector 70; first connector 70a; second connector 70b; first connecting portion 71; second connecting portion 72; first connecting hole 711; limiting groove 712; sixth anti-rotation surface 713; explosion-proof valve 80; sealing ring 90.

### DETAILED DESCRIPTION

The following clearly and completely describes technical solutions in embodiments of the present disclosure with reference to accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall belong to the scope of protection of the present disclosure.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is well-known, in order to achieve the big goal for carbon neutrality, the main way of generating green electrical energy is currently to develop green energy such as photovoltaics and wind power to replace fossil energy. At present, generation of green electrical energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "abandoned wind and abandoned light" may occur due to insufficient power demand or insufficient power-grid admitting ability, and energy-storage is required to solve these problems. That is, electrical energy is stored by converting it into other forms of energy by physical or chemical means, and energy is released by converting it into electrical energy when needed. In brief, energy-storage is similar to a large "power bank", which stores electrical energy when photovoltaics and wind energy are sufficient and releases stored electric power when needed.

Taking electrochemical energy-storage as an example, an energy-storage apparatus is provided in the disclosure. A group of chemical batteries is disposed in the energy-storage apparatus. Chemical elements in the chemical batteries can be mainly used as an energy-storage medium, and a charging/discharging process goes with chemical reaction or change of the energy-storage medium. In brief, electrical energy generated by wind energy and solar energy is stored in the chemical batteries. When the usage of external electrical energy reaches a peak, the power stored is released for use or is transferred to a place where the power is scarce for reuse.

At present, energy-storage may be applied in various application scenarios, including power-generation-side energy-storage, grid-side energy-storage, renewable energy grid-connected energy-storage, user-side energy-storage, etc., and accordingly, the energy-storage apparatus includes the following.
(1) A large-sized energy-storage container applied in a grid-side energy-storage scenario. The energy-storage container may serve as a high-quality active and reactive regulation power source in the grid, which can realize matching of electrical energy loads in time and space, enhance the capacity for integration of renewable energy, and is of great significance in the backup of the grid system, relieving the pressure of power supply at a peak load, and peak shaving and frequency modulation.
(2) A small and medium-sized energy-storage cabinet applied in a user-side industrial and commercial energy-storage scenario (banks, shopping malls, and the like), as well as a small-sized household energy-storage box applied in a user-side household energy-storage scenario, which mainly operate in a "peak shaving and valley filling" mode. Based on the demand for electricity, there may be a significant price difference in electricity prices at peak and valley periods. With aid of the energy-storage apparatus, in order to reduce cost, an energy-storage cabinet/box may be charged during an electricity-price valley period, and the electricity in the energy-storage apparatus may be released for use during the electricity-price peak period to save electricity cost. In addition, in remote areas and regions prone to natural disasters such as earthquakes and hurricanes, a household energy-storage apparatus can serve as a backup power supply for users and the power grid, eliminating the inconvenience caused by frequent power outages due to disasters or other reasons.

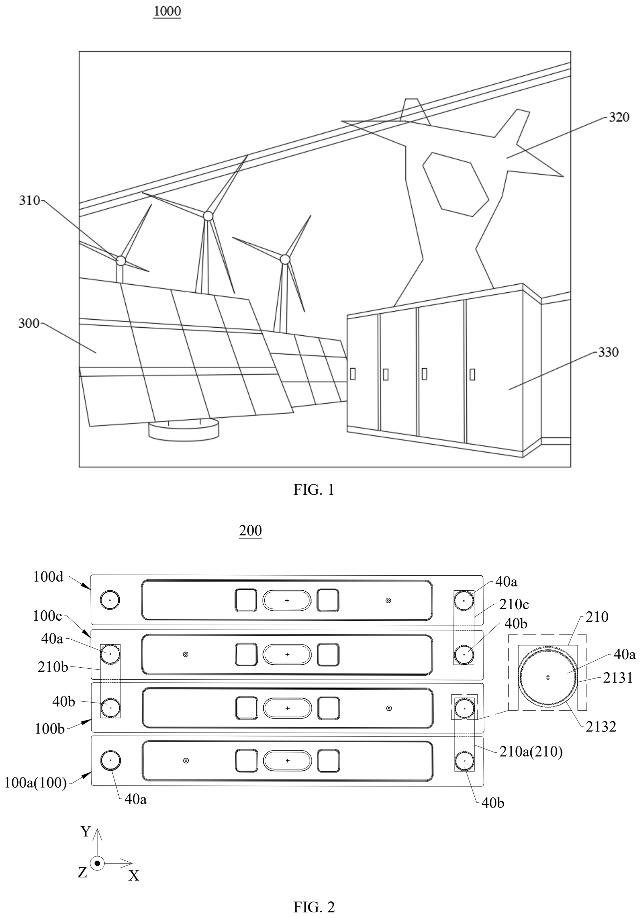

Reference is made to FIG. 1, which is an application scenario diagram of a power-consuming device according to an embodiment of the present disclosure. The embodiment of the present disclosure is described by taking a household energy-storage scenario in user-side energy-storage as an example, and the energy-storage apparatus of the present disclosure is not limited to the household energy-storage scenario.

The present disclosure provides a household energy-storage system 1000. The household energy-storage system 1000 includes an electric energy conversion device 300 (photovoltaic panel), a wind energy conversion device 310 (windmill), a first user load 320 (base station), a second user load (not illustrated) (commercial and industrial side), etc., and an energy-storage apparatus. The energy-storage system 1000 further includes an energy-storage cabinet 330, and the energy-storage apparatus is installed in the energy-storage cabinet 330 to facilitate outdoor installation. Specifically, the electric energy conversion device 300 can convert solar energy into electric energy during the off-peak electricity price period. The energy-storage apparatus is used to store the electric energy and supply power to the base station and the commercial and industrial side for use during the peak electricity price period, or supply power when the power grid is cut off/powered off. The wind energy conversion device 310 (windmill) can convert wind energy into electric energy, and the energy-storage apparatus is used to store the electric energy and supply power to the base station and the commercial and industrial side for use during the peak electricity price period, or supply power when the power grid is cut off/powered off. Electric energy can be transmitted through high-voltage cables.

The energy-storage cabinet 330 can be understood as a power-consuming device. The energy-storage apparatus can also be used in the forms of energy-storage containers, medium and small-sized energy-storage cabinets, household small-sized energy-storage boxes, etc. Devices such as energy-storage containers, medium and small-sized energy-storage cabinets, and household small-sized energy-storage boxes include energy-storage apparatuses. All devices including energy-storage apparatuses, such as energy-storage containers, medium and small-sized energy-storage cabinets, and household small-sized energy-storage boxes, can be understood as a power-consuming device.

It can be understood that the energy-storage apparatus may include, but is not limited to, a battery cell, a battery module, a battery pack, a battery system, etc. An actual application form of the energy-storage apparatus provided in embodiments of the present disclosure may be, but is not limited to, the listed products, and may also be in other application forms. The embodiments of the present disclosure do not strictly limit application forms of the energy-storage apparatus.

In embodiments of the present disclosure, the energy-storage apparatus is a battery module, and the battery module includes multiple battery cells.

Reference is made to FIG. 2, which is a schematic structural diagram of an energy-storage apparatus 200 according to an embodiment of the present disclosure.

The energy-storage apparatus 200 includes multiple battery cells 100 and multiple electrical connecting pieces 210. Each battery cell 100 includes two terminal posts 40. The two terminal posts 40 are a first terminal post 40a and a second terminal post 40b respectively. In this embodiment, the first terminal post 40a is a positive terminal post, and the second terminal post 40b is a negative terminal post. Current flows from the first terminal post 40a into an electrode assembly of the battery cell 100, and then flows out from the second terminal post 40b.

The multiple battery cells 100 are arranged side by side, and every two adjacent battery cells 100 are electrically connected through an electrical connecting piece 210, so as to realize series-parallel connection of the multiple battery cells 100. Exemplarily, in this embodiment, the multiple battery cells 100 are connected in series. A first electrical connecting piece 210a is connected between a second terminal post 40b of a first battery cell 100a and a first terminal post 40a of a second battery cell 100b, a second electrical connecting piece 210b is connected between a second terminal post 40b of the second battery cell 100b and a first terminal post 40a of a third battery cell 100c, and a third electrical connecting piece 210c is connected between a second terminal post 40b of the third battery cell 100c and a first terminal post 40a of a fourth battery cell 100d, thereby realizing the sequential series connection of four battery cells 100 as illustrated in FIG. 2.

The electrical connecting piece 210 is fixedly connected and electrically connected to the terminal post 40 by welding.

It may be noted that when the electrical connecting piece 210 is poorly welded to the terminal post 40, or the electrical connecting piece 210 needs to be disassembled from the terminal post 40 for other reasons, the electrical connecting piece 210 may cause the terminal post 40 to twist, thereby affecting sealing of the terminal post 40 and stability of an electrical connection between the terminal post 40 and an electrode assembly.

The energy-storage apparatus 200 provided in the present disclosure can reduce or even avoid twisting of the terminal post 40 when subjected to an external force, thereby preventing sealing failure of the terminal post 40 and improving the stability of the electrical connection between the terminal post 40 and the electrode assembly.

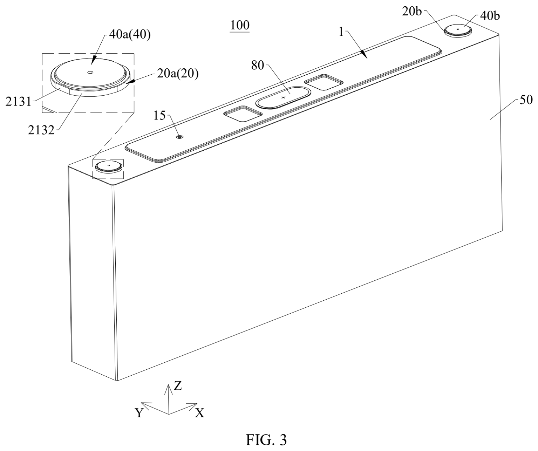

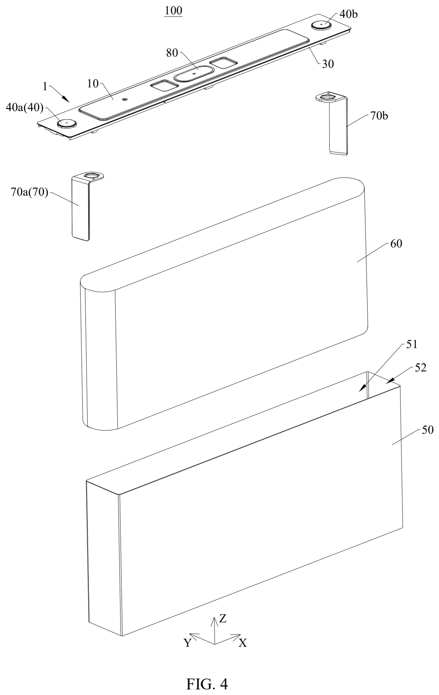

Reference is made to FIGS. 3 and 4, where FIG. 3 is a schematic structural diagram of the battery cell 100 in the energy-storage apparatus 200 illustrated in FIG. 2, and FIG. 4 is an exploded structural diagram of the battery cell 100 illustrated in FIG. 3.

For convenience of description, in the present disclosure, a length direction of the battery cell 100 is defined as a first direction, i.e., the X direction; a width direction of the battery cell 100 is defined as a second direction, i.e., the Y direction; and a height direction of the battery cell 100 is defined as a third direction, i.e., the Z direction. The X direction, Y direction, and Z direction are perpendicular to each other.

The battery cell 100 includes a housing 50, an end cover assembly 1, an electrode assembly 60, an electrolyte, and a connector 70. The housing 50 defines an accommodating cavity 51 and an opening 52, the accommodating cavity 51 is in communication with the opening 52, and the opening 52 is located on one side of the housing 50 in the height direction. The electrode assembly 60 and the electrolyte are disposed in the accommodating cavity 51, and the electrode assembly 60 is immersed in the electrolyte. The electrode assembly 60 includes multiple pole cores. The multiple pole cores are arranged side by side in the width direction (Y direction) of the energy-storage apparatus 200. The pole core includes a positive tab and a negative tab (not illustrated). The end cover assembly 1 is installed at one side of the housing 50 where the opening 52 is located and is fixedly connected to the housing 50 to seal the accommodating cavity 51. There are two connectors 70. The two connectors 70 are a first connector 70a and a second connector 70b respectively. The first connector 70a is connected between the positive tab and the first terminal post 40a of the end cover assembly 1, and the second connector 70b is connected between the negative tab and the second terminal post 40b of the end cover assembly 1.

In this embodiment, an outer side of the electrode assembly 60 is further covered with an insulating film (not illustrated), which is used to protect the pole cores and prevent the pole cores from being scratched. The insulating film covers the outer surface of the electrode assembly 60, and a side edge of the insulating film is hot-melt bonded to the end cover assembly 1.

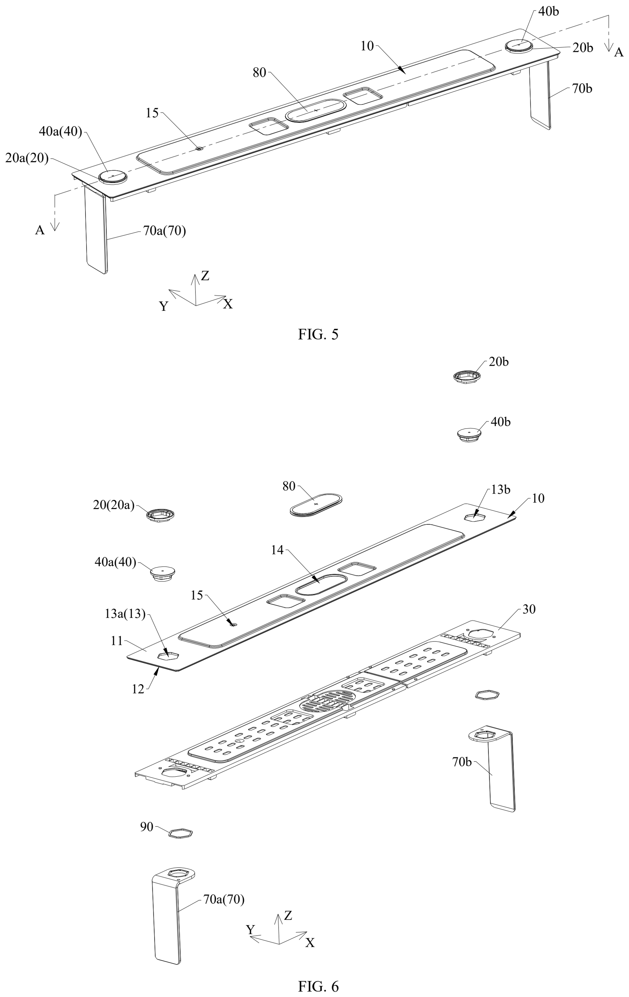

Reference is made to FIGS. 5 and 6, where FIG. 5 is a schematic structural diagram illustrating part of the battery cell 100 illustrated in FIG. 2, and FIG. 6 is a partial exploded structural diagram of the battery cell 100 illustrated in FIG. 5.

The end cover assembly 1 includes an end cover 10, an upper plastic member 20, a lower plastic member 30, a terminal post 40, and an explosion-proof valve 80. In this embodiment, the end cover 10 is a rectangular thin plate. In other embodiments, the end cover 10 may also be a circular plate, an elliptical plate, or a special-shaped plate. In this embodiment, the end cover 10 is a smooth aluminum member. The end cover 10 includes a top surface 11 and a bottom surface 12. The top surface 11 and the bottom surface 12 are arranged opposite to each other in the Z direction. The end cover 10 defines a terminal-post through-hole 13, a first explosion-proof hole 14, and a first liquid injection hole 15. The terminal-post through-hole 13 is implemented as two terminal-post through-holes 13, which are a first terminal-post through-hole 13a and a second terminal-post through-hole 13b respectively. In the length direction of the end cover 10, i.e., in the X direction, the first terminal-post through-hole 13a, the first liquid injection hole 15, the first explosion-proof hole 14, and the second terminal-post through-hole 13b are sequentially disposed at intervals. Moreover, the first terminal-post through-hole 13a, the first liquid injection hole 15, the first explosion-proof hole 14, and the second terminal-post through-hole 13b each extend through the top surface 11 and the bottom surface 12 in the Z direction.

The terminal post 40 is implemented as two terminal posts 40, which are a first terminal post 40a and a second terminal post 40b respectively. The upper plastic member 20 is implemented as two upper plastic members 20, which are a first upper plastic member 20a and a second upper plastic member 20b respectively. The first terminal post 40a is inserted through the first terminal-post through-hole 13a. The first upper plastic member 20a is sleeved on an outer periphery of the first terminal post 40a and connected to the first terminal post 40a and the end cover 10. The first terminal post 40a is insulated from the end cover 10 by the first upper plastic member 20a. The second terminal post 40b is inserted through the second terminal-post through-hole 13b. The second upper plastic member 20b is sleeved on an outer periphery of the second terminal post 40b and connected to the second terminal post 40b and the end cover 10. The second terminal post 40b is insulated from the end cover 10 by the second upper plastic member 20b. In this embodiment, the first terminal post 40a is a positive terminal post 40, and the second terminal post 40b is a negative terminal post 40. In other embodiments, the first terminal post 40a is a negative terminal post 40, and the second terminal post 40b is a positive terminal post 40.

The explosion-proof valve 80 is installed in the first explosion-proof hole 14 and fixedly connected to the end cover 10. Exemplarily, the explosion-proof valve 80 is welded to an inner wall of the first explosion-proof hole 14. When the pressure inside the energy-storage apparatus 200 is excessively high, the explosion-proof valve 80 will automatically open to release pressure, so as to prevent the energy-storage apparatus 200 from exploding and improve safety performance of the energy-storage apparatus 200.

The first liquid injection hole 15 is defined between the explosion-proof valve 80 and the first terminal post 40a. In the liquid injection process of the energy-storage apparatus 200, electrolyte is injected into the battery cell 100 through the first liquid injection hole 15.

The lower plastic member 30 is roughly a rectangular thin sheet. The lower plastic member 30 is made of an insulating material. Exemplarily, the lower plastic member 30 is made of plastic or rubber, or the lower plastic member 30 may be made of other insulating materials. The lower plastic member 30 is disposed at the bottom of the end cover 10 and stacked with the end cover 10 in the Z direction, and the lower plastic member 30 is fixedly connected to the end cover 10. The lower plastic member 30 is used to realize insulation between the electrode assembly 60 and the end cover 10.

Part of the structure of the end cover assembly 1 in a negative X-axis direction will be described below as an example.

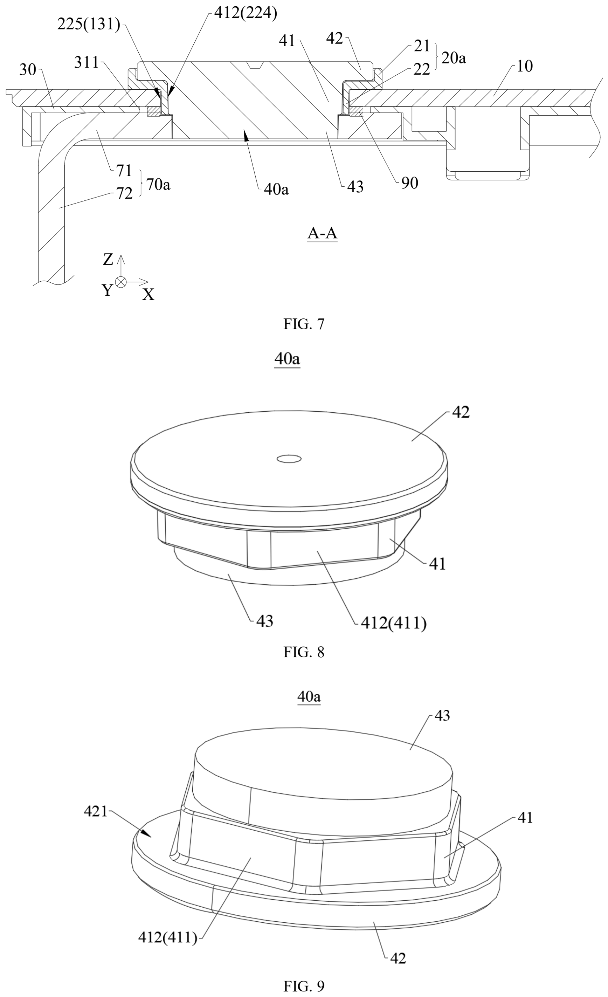

Reference is made to FIGS. 7 to 9, FIG. 7 is a partial sectional schematic structural diagram of the battery cell 100 illustrated in FIG. 5 taken along the A-A direction, FIG. 8 is a schematic structural diagram of the first terminal post 40a in the battery cell 100 illustrated in FIG. 6, and FIG. 9 is a schematic structural diagram of the first terminal post 40a illustrated in FIG. 8, viewed from another direction.

The first terminal post 40a includes a cylinder 41, a protrusion 42, and a flange 43. The cylinder 41 is columnar in shape but non-cylindrical. That is, an outer contour of the cylinder 41 is non-circular. The cylinder 41 has a first outer peripheral surface 411. The first outer peripheral surface 411 includes a second anti-rotation surface 412. In this embodiment, the second anti-rotation surface 412 is a planar surface. That is, at least part of the first outer peripheral surface 411 is a planar surface. Exemplarily, the second anti-rotation surface 412 is implemented as multiple second anti-rotation surfaces 412. The multiple second anti-rotation surfaces 412 are sequentially arranged and are connected end to end to form an outer periphery of the cylinder 41. It can be understood that a cross section of the cylinder 41 parallel to the XY planar surface is polygon-shaped. Exemplarily, the number of the second anti-rotation surfaces 412 is six. The six second anti-rotation surfaces 412 are sequentially arranged and are connected end to end to form the outer periphery of the cylinder 41. That is, a shape of the cross section of the cylinder 41 parallel to the XY planar surface is hexagonal. Specifically, the shape of the cross section of the cylinder 41 parallel to the XY planar surface is a regular hexagon, that is, the first outer peripheral surface 411 is formed by six planar surfaces connected end to end.

In this embodiment, an arc chamfer is arranged between every two adjacent second anti-rotation surfaces 412 to improve smoothness of the first outer peripheral surface 411.

In some embodiments, the shape of the cross section of the cylinder 41 parallel to the XY planar surface may also be quadrilateral, pentagonal, heptagonal, octagonal, etc.

In some embodiments, the first outer peripheral surface 411 can also be formed by connecting a curved surface and a planar surface. Exemplarily, the first outer peripheral surface 411 includes a connecting curved surface and a second anti-rotation surface 412 which are connected to each other. Alternatively, the first outer peripheral surface 411 may also include two connecting curved surfaces and two second anti-rotation surfaces 412, the two second anti-rotation surfaces 412 are arranged opposite to each other, the two connecting curved surfaces are arranged opposite to each other, and the two connecting curved surfaces each are connected between the two second anti-rotation surfaces 412. That is, the shape of the cross section of the cylinder 41 parallel to the XY planar surface is roughly racetrack-shaped.

In some embodiments, the second anti-rotation surface 412 may also be a curved surface. Exemplarily, the first outer peripheral surface 411 includes a connecting curved surface and a second anti-rotation surface 412 connected to each other, and the radius of curvature of the second anti-rotation surface 412 is different from that of the connecting curved surface. Alternatively, the contour of the first outer peripheral surface 411 may also be elliptical or special-shaped.

It may be noted that in this embodiment, the shape of the cylinder 41 is not specifically limited, as long as an outer contour of the first outer peripheral surface 411 of the cylinder 41 is non-circular.

The protrusion 42 and the flange 43 are respectively connected to two opposite sides of the cylinder 41 in the height direction. In this embodiment, both the protrusion 42 and the flange 43 are cylindrical. The area of a cross section of the flange 43 parallel to the XY planar surface is smaller than the area of a cross section of the cylinder 41 parallel to the XY planar surface. Moreover, an orthographic projection of the flange 43 in the Z direction is completely within an orthographic projection of the cylinder 41 in the Z direction. Exemplarily, when the shape of the cross section of the cylinder 41 parallel to the XY planar surface is a regular hexagon, a contour of the orthographic projection of the flange 43 in the Z direction is an inscribed circle of a contour of the orthographic projection of the cylinder 41 in the Z direction.

The flange 43 is used for electrical connection with the connecting piece. In this embodiment, by arranging the orthographic projection of the flange 43 in the Z direction to be completely within the orthographic projection of the cylinder 41 in the Z direction, the installation of the first terminal post 40a can be facilitated, that is, the first terminal post 40a can be conveniently sleeved into a through hole 201 of the first upper plastic member 20a.

The area of a cross section of the protrusion 42 parallel to the XY planar surface is larger than the area of the cross section of the cylinder 41 parallel to the XY planar surface. Moreover, an orthographic projection of the protrusion 42 in the Z direction completely covers the orthographic projection of the cylinder 41 in the Z direction. As illustrated in FIG. 9, an outer peripheral surface of the protrusion 42 exceeds an outer peripheral surface of the cylinder 41, and the protrusion 42 forms a limiting portion 421 at an outer peripheral edge of the cylinder 41. The limiting portion 421 is used to mate with the first upper plastic member 20a to improve connection stability between the first terminal post 40a and the first upper plastic member 20a and enhance an insulation effect of the first upper plastic member 20a on the first terminal post 40a.

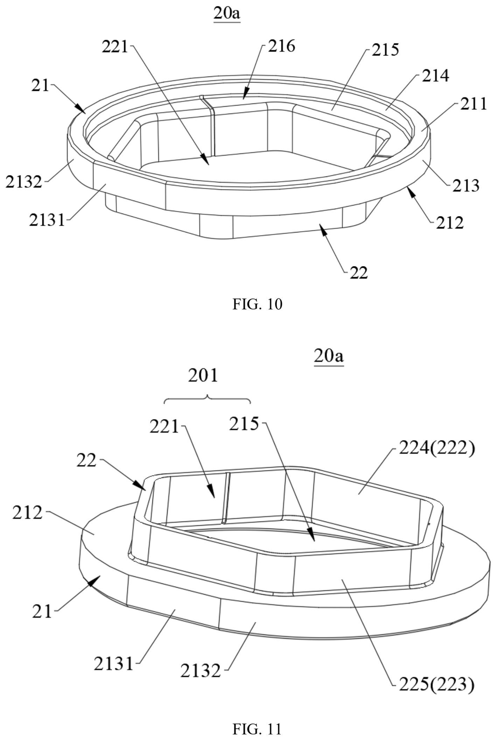

Reference is made to FIGS. 10 and 11, where FIG. 10 is a schematic structural diagram of the first upper plastic member 20a in the battery cell 100 illustrated in FIG. 6, and FIG. 11 is a schematic structural diagram of the first upper plastic member 20a illustrated in FIG. 10, viewed from another direction.

The first upper plastic member 20a is annular. The first upper plastic member 20a defines the through hole 201. The through hole 201 extends through the first upper plastic member 20a in the height direction of the first upper plastic member 20a, i.e., in the Z direction. The through hole 201 is used for the first terminal post 40a to pass through.

The first upper plastic member 20a includes a body 21 and a protruding portion 22. The body 21 has a first surface 211, a second surface 212, a second outer peripheral surface 213, and a second inner peripheral surface 214. The first surface 211 and the second surface 212 are arranged opposite to each other in the thickness direction of the body 21. The second outer peripheral surface 213 is connected between the first surface 211 and the second surface 212. The body 21 defines a first mounting through-hole 215. An opening of the first mounting through-hole 215 is defined in the first surface 211, and the first mounting through-hole 215 at least partially extends through the second surface 212. The second inner peripheral surface 214 is arranged opposite to the second outer peripheral surface 213. It can be understood that the second inner peripheral surface 214 is a side wall surface of the first mounting through-hole 215.

The second outer peripheral surface 213 includes a positioning surface 2131 and a connecting surface 2132. The positioning surface 2131 is connected to the connecting surface 2132. The positioning surface 2131 is a planar surface. In this embodiment, the connecting surface 2132 is a curved surface, which can save materials while ensuring the thickness of the first upper plastic member 20a, and can improve smoothness of the second outer peripheral surface 213. In other embodiments, the connecting surface 2132 may also be a planar surface.

Specifically, in this embodiment, there are two positioning surfaces 2131 and two connecting surfaces 2132. The two positioning surfaces 2131 are arranged opposite to each other and in parallel. The two connecting surfaces 2132 are arranged opposite to each other and each connected between the two positioning surfaces 2131. The positioning surface 2131 is used to position the electrical connecting piece 210, so as to improve installation accuracy of the electrical connecting piece 210.

The protruding portion 22 is annular. The protruding portion 22 defines a second mounting through-hole 221. The second mounting through-hole 221 extends through the protruding portion 22 in the height direction of the protruding portion 22, i.e., in the Z direction. The protruding portion 22 has a third inner peripheral surface 222 and a third outer peripheral surface 223. The third inner peripheral surface 222 is arranged opposite to the third outer peripheral surface 223. It can be understood that the third inner peripheral surface 222 is an inner wall surface of the second mounting through-hole 221. The second mounting through-hole 221 is adapted to the cylinder 41 in structure, and a contour of the third inner peripheral surface 222 is consistent with or substantially the same as a contour of the first outer peripheral surface 411.

The shape of the second mounting through-hole 221 is non-cylindrical, that is, the shape of the cross section of the second mounting through-hole 221 along the XY planar surface is non-circular. The third inner peripheral surface 222 includes a first anti-rotation surface 224. In this embodiment, the first anti-rotation surface 224 is a planar surface. That is, at least part of the third inner peripheral surface 222 is a planar surface. Exemplarily, the first anti-rotation surface 224 is implemented as multiple anti-rotation surfaces 224. The multiple first anti-rotation surfaces 224 are sequentially arranged and are connected end to end to form an inner periphery of the second mounting through-hole 221. It can be understood that the shape of the cross section of the second mounting through-hole 221 along the XY planar surface is a polygon, that is, a contour of the third inner peripheral surface 222 is a polygon. Exemplarily, the number of the first anti-rotation surfaces 224 is six. The six first anti-rotation surfaces 224 are sequentially arranged and are connected end to end to form the inner periphery of the second mounting through-hole 221. That is, the shape of the cross section of the second mounting through-hole 221 parallel to the XY planar surface is hexagonal. Specifically, the shape of the cross section of the second mounting through-hole 221 parallel to the XY planar surface is a regular hexagon, and the third inner peripheral surface 222 is formed by connecting six planar surfaces end to end.

In some other embodiments, the shape of the cross section of the second mounting through-hole 221 parallel to the XY planar surface may also be quadrilateral, pentagonal, heptagonal, octagonal, etc. Alternatively, the third inner peripheral surface 222 may also be composed of an arc-shaped connecting curved surface and a planar first anti-rotation surface 224.

Alternatively, the first anti-rotation surface 224 may also be a curved surface. Exemplarily, the third inner peripheral surface 222 includes a connecting curved surface and a first anti-rotation surface 224 connected to each other, and the radius of curvature of the connecting curved surface is different from that of the first anti-rotation surface 224. Alternatively, the contour of the third inner peripheral surface 222 may also be elliptical or special-shaped.

In this embodiment, the shape of the third outer peripheral surface 223 is the same as the shape of the third inner peripheral surface 222, and the third outer peripheral surface 223 is in parallel with the third inner peripheral surface 222, so as to simplify the manufacturing process of the protruding portion 22, i.e., simplify the manufacturing process of the first upper plastic member 20a. The contour of the third outer peripheral surface 223 is non-circular, that is, the shape of the cross section of the third outer peripheral surface 223 along the XY planar surface is non-circular. The third outer peripheral surface 223 includes a fourth anti-rotation surface 225. In this embodiment, the fourth anti-rotation surface 225 is a planar surface. That is, at least part of the third outer peripheral surface 223 is a planar surface. Exemplarily, the fourth anti-rotation surface 225 is implemented as multiple fourth anti-rotation surfaces 225. The multiple fourth anti-rotation surfaces 225 are sequentially arranged and are connected end to end to form an outer periphery of the protruding portion 22. It can be understood that the contour of the third outer peripheral surface 223 is a polygon, that is, the shape of the cross section of the third outer peripheral surface 223 along the XY planar surface is a polygon. Exemplarily, the fourth anti-rotation surface 225 is implemented as six fourth anti-rotation surfaces 225. The six fourth anti-rotation surfaces 225 are sequentially arranged and are connected end to end to form the outer periphery of the protruding portion 22. That is, the contour of the third outer peripheral surface 223 is hexagonal. Specifically, the contour of the third outer peripheral surface 223 is a regular hexagon. The contour of the third outer peripheral surface 223 is consistent with or substantially the same as the contour of the first terminal-post through-hole 13a.

In some embodiments, the contour of the third outer peripheral surface 223 may also be quadrilateral, pentagonal, heptagonal, octagonal, etc. Alternatively, the third outer peripheral surface 223 may also be composed of an arc-shaped connecting curved surface and a planar fourth anti-rotation surface 225.

In some embodiments, the fourth anti-rotation surface 225 may also be a curved surface. Exemplarily, the third outer peripheral surface 223 includes a connecting curved surface and a fourth anti-rotation surface 225 connected in an arc shape, and the radius of curvature of the connecting curved surface is different from that of the fourth anti-rotation surface 225. Alternatively, the contour of the third outer peripheral surface 223 may also be elliptical or special-shaped.

The protruding portion 22 is connected to the second surface 212 of the body 21. The second mounting through-hole 221 is in communication with the first mounting through-hole 215 to cooperatively form the through hole 201 of the first upper plastic member 20a. The cross-sectional area of the second mounting through-hole 221 is smaller than the cross-sectional area of the first mounting through-hole 215. That is, the projection of the first mounting through-hole 215 in the Z direction completely covers the projection of the second mounting through-hole 221 in the Z direction. An outer peripheral edge of the projection of the first mounting through-hole 215 in the Z direction exceeds an outer peripheral edge of the projection of the second mounting through-hole 221 in the Z direction, so that a limiting step 216 is formed on a bottom wall of the first mounting through-hole 215. The limiting step 216 is used to limit the first terminal post 40a.

Reference is made to FIG. 7, the first upper plastic member 20a is installed on the end cover 10, the protruding portion 22 is inserted into the first terminal-post through-hole 13a, and the body 21 is located on the top surface 11 of the end cover 10. In this embodiment, the third outer peripheral surface 223 is in contact with the inner wall of the first terminal-post through-hole 13a, and the body 21 is in contact with the top surface 11 of the end cover 10. The first terminal post 40a passes through the through hole 201 of the first upper plastic member 20a. The flange 43 passes through the first upper plastic member 20a and extends out of the through hole 201, and is configured to be electrically connected to the first connector 70a. The cylinder 41 is disposed in the second mounting through-hole 221, and the first outer peripheral surface 411 is opposite to and in contact with the third inner peripheral surface 222. The second anti-rotation surface 412 is in parallel with and in contact with the first anti-rotation surface 224. Specifically, when there are multiple first anti-rotation surfaces 224 and multiple second anti-rotation surfaces 412, the multiple second anti-rotation surfaces 412 are disposed in one-to-one correspondence with the multiple first anti-rotation surfaces 224, and each second anti-rotation surface 412 is disposed in parallel with and in contact with a corresponding first anti-rotation surface 224. Moreover, the second anti-rotation surface 412 and the first anti-rotation surface 224 restrain in a circumferential direction of the first terminal post 40a. The protrusion 42 is disposed in the first mounting through-hole 215 of the body 21 and in contact with the inner wall of the first mounting through-hole 215. Specifically, the outer peripheral surface of the protrusion 42 is arranged opposite to and in contact with the inner peripheral surface of the body 21, and the limiting portion 421 of the protrusion 42 abuts against the limiting step 216 in the first mounting through-hole 215.

It can be understood that when the first terminal post 40a is subjected to an external torsional force, the cylinder 41 has a tendency to rotate relative to the protruding portion 22. The first outer peripheral surface 411 abuts against the third inner peripheral surface 222, and specifically, the second anti-rotation surface 412 abuts against the first anti-rotation surface 224. Since the outer contours of the first outer peripheral surface 411 and the third inner peripheral surface 222 are both non-cylindrical, and the first anti-rotation surface 224 and the second anti-rotation surface 412 are both planar surfaces, the first anti-rotation surface 224 can limit the rotation of the second anti-rotation surface 412, thereby limiting rotation of the cylinder 41 around an axial direction, and further limiting the rotation of the first terminal post 40a.

In this embodiment, by providing the second anti-rotation surface 412 on the first terminal post 40a and the first anti-rotation surface 224 matching with the second anti-rotation surface 412 on the first upper plastic member 20a, the second anti-rotation surface 412 can prevent the first terminal post 40a from rotating relative to the first upper plastic member 20a, thereby improving the connection stability between the first terminal post 40a and the first upper plastic member 20a, and increasing the torsional force between the first terminal post 40a and the first upper plastic member 20a, so as to reduce or even prevent the first terminal post 40a from twisting relative to the first upper plastic member 20a when subjected to an external force, and thus avoid the sealing failure of the first terminal post 40a caused by the welding failure between the first terminal post 40a and the first connector 70a. For example, when the electrical connecting piece 210 is poorly welded to the first terminal post 40a and the electrical connecting piece 210 needs to be disassembled, the end cover assembly 1 provided in this embodiment can prevent the electrical connecting piece 210 from causing the first terminal post 40a to rotate relative to the first upper plastic member 20a by providing the second anti-rotation surface 412 on the first terminal post 40a and the first anti-rotation surface 224 on the first upper plastic member 20a.

It can be noted that since both the cylinder 41 and the second mounting through-hole 221 are non-cylindrical, when the first upper plastic member 20a and the first terminal post 40a are assembled, it is difficult to accurately align the cylinder 41 in the mounting through hole 201, thereby affecting the assembly efficiency. In this embodiment, by providing the positioning surface 2131 on the second outer peripheral surface 213 of the first upper plastic member 20a, the first upper plastic member 20a can be positioned, so that when the first upper plastic member 20a is installed on the first terminal post 40a, the first upper plastic member 20a can be quickly aligned with the first terminal post 40a, and a grabbing area can be increased, thereby improving the efficiency of installing the first upper plastic member 20a on the first terminal post 40a, and further improving the assembly efficiency of the end cover assembly 1 and the battery cell 100.

Exemplarily, in this embodiment, the cross sections of the cylinder 41 and the second mounting through-hole 221 are both regular hexagons, the contour of the third inner peripheral surface 222 is a regular hexagon, and the two positioning surfaces 2131 of the second outer peripheral surface 213 are respectively in parallel with the two opposite first anti-rotation surfaces 224 in the third inner peripheral surface 222. During the process of installing the first upper plastic member 20a on the first terminal post 40a, the two positioning surfaces 2131 can be respectively parallel to and aligned with the two opposite second anti-rotation surfaces 412 of the cylinder 41, then the first upper plastic member 20a is sleeved on the outer periphery of the first terminal post 40a, and the cylinder 41 is inserted into the second mounting through-hole 221. In this case, the second anti-rotation surfaces 412 and the first anti-rotation surfaces 224 are disposed in one-to-one correspondence and in parallel, and the assembly between the first upper plastic member 20a and the first terminal post 40a is completed.

Reference is made to FIG. 2, in this embodiment, by providing the positioning surface 2131 on the second outer peripheral surface 213 of the first upper plastic member 20a, the electrical connecting piece 210 can be positioned, which ensures a connection angle and a connection position of the electrical connecting piece 210, and improves the connection yield between the electrical connecting piece 210 and the terminal post 40. Specifically, when the positioning surface 2131 is parallel to the width direction of the battery cell 100 and the shape of the electrical connecting piece 210 is rectangular, during the process of welding the electrical connecting piece 210 to the first terminal post 40a, an edge of the electrical connecting piece 210 in the Y direction can be parallel to and aligned with the positioning surface 2131, or an angle between the edge of the electrical connecting piece 210 in the Y direction and the positioning surface 2131 can be adjusted to a preset angle, then the electrical connecting piece 210 is welded to the first terminal post 40a to realize the assembly between the electrical connecting piece 210 and the first terminal post 40a.

Moreover, in this embodiment, the second outer peripheral surface 213 of the first upper plastic member 20a is configured as a combination of a planar surface and a curved surface, so that the first upper plastic member 20a has a positioning function, and at the same time, the thickness of the body 21 of the first upper plastic member 20a is ensured, and the material of the first upper plastic member 20a is saved. That is, in this embodiment, by providing both the positioning surface 2131 and the curved connecting surface 2132 on the second outer peripheral surface 213 of the first upper plastic member 20a, the assembly efficiency of the energy-storage apparatus 200 is improved, and production costs of the battery cell 100 and the energy-storage apparatus 200 are reduced.

Meanwhile, in this embodiment, two positioning surfaces 2131 are arranged opposite to each other on the second outer peripheral surface 213 of the first upper plastic member 20a, so that the first upper plastic member 20a is easy to be clamped, and it is convenient to move or place the first upper plastic member 20a.

In addition, in this embodiment, the cross-sectional area of the protrusion 42 is set to be larger than that of the cylinder 41, and the limiting step 216 is formed on the first upper plastic member 20a, which can increase a contact area between the first terminal post 40a and the first upper plastic member 20a. Meanwhile, the limiting step 216 can limit the protrusion 42 in the Z direction, thereby improving connection stability between the first terminal post 40a and the first upper plastic member 20a.

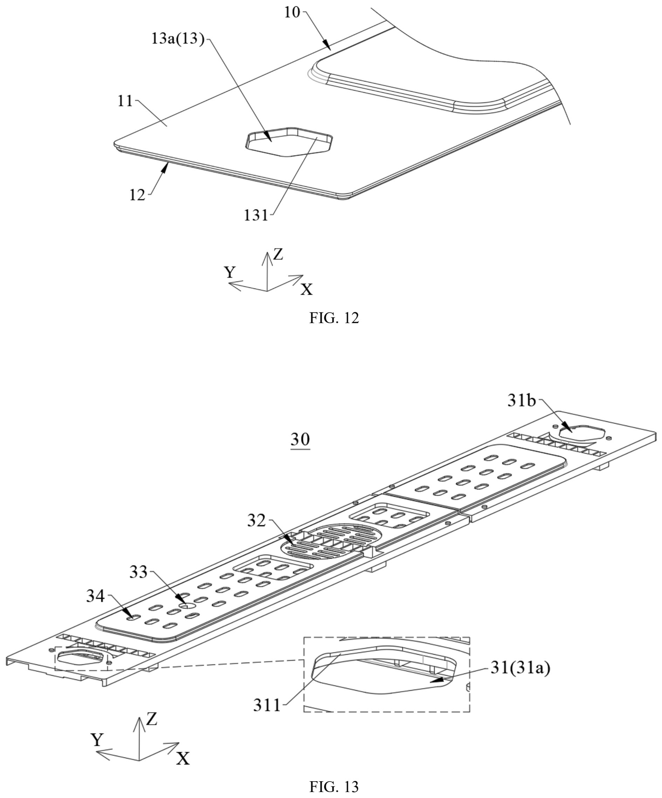

Referring to FIGS. 7 and 12, where FIG. 12 is a schematic structural diagram illustrating part of the end cover 10 in the battery cell 100 illustrated in FIG. 6.

The shape of the first terminal-post through-hole 13a is non-cylindrical, and the contour of the first terminal-post through-hole 13a is consistent with or substantially the same as the contour of the third outer peripheral surface 223. An inner wall surface of the first terminal-post through-hole 13a includes a third anti-rotation surface 131. In this embodiment, the third anti-rotation surface 131 is a planar surface. That is, at least part of the inner wall surface of the first terminal-post through-hole 13a is a planar surface. The third anti-rotation surface 131 is implemented as multiple third anti-rotation surfaces 131. The multiple third anti-rotation surfaces 131 are sequentially arranged and are connected end to end to form the inner wall surface of the first terminal-post through-hole 13a. It can be understood that the shape of the cross section of the first terminal-post through-hole 13a along the XY planar surface is a polygon, that is, a contour of the inner wall surface of the first terminal-post through-hole 13a is a polygon. Exemplarily, the number of the third anti-rotation surfaces 131 is six. The six third anti-rotation surfaces 131 are sequentially arranged and are connected end to end to form the inner wall surface of the first terminal-post through-hole 13a. That is, the shape of the cross section of the first terminal-post through-hole 13a along the XY planar surface is hexagonal. Specifically, the shape of the cross section of the first terminal-post through-hole 13a along the XY planar surface is a regular hexagon. That is, the contour of the inner wall surface of the first terminal-post through-hole 13a is a regular hexagon structure.

In some embodiments, the shape of the cross section of the first terminal-post through-hole 13a parallel to the XY planar surface may also be quadrilateral, pentagonal, heptagonal, octagonal, etc. Alternatively, the inner wall surface of the first terminal-post through-hole 13a may also be composed of an arc-shaped connecting curved surface and a planar third anti-rotation surface 131.

In some embodiments, the third anti-rotation surface 131 may also be a curved surface. Exemplarily, the inner wall surface of the first terminal-post through-hole 13a includes a connecting curved surface and a third anti-rotation surface 131 connected to each other, and the radius of curvature of the connecting curved surface is different from that of the third anti-rotation surface 131. Alternatively, the contour of the inner wall surface of the first terminal-post through-hole 13a may also be elliptical or special-shaped.

When the first upper plastic member 20a and the first terminal post 40a are installed on the end cover 10, the protruding portion 22 of the first upper plastic member 20a passes through the first terminal-post through-hole 13a, the third outer peripheral surface 223 is arranged opposite to and parallel to the inner wall of the first terminal-post through-hole 13a, and the third outer peripheral surface 223 is in contact with the inner wall of the first terminal-post through-hole 13a. The fourth anti-rotation surface 225 is disposed in parallel with and in contact with the third anti-rotation surface 131, and the fourth anti-rotation surface 225 and the third anti-rotation surface 131 restrain in the circumferential direction of the first upper plastic member 20a. Specifically, when there are multiple third anti-rotation surfaces 131 and multiple fourth anti-rotation surfaces 225, the multiple fourth anti-rotation surfaces 225 are disposed in one-to-one correspondence with the multiple third anti-rotation surfaces 131, and each fourth anti-rotation surface 225 is disposed in parallel with and in contact with a corresponding third anti-rotation surface 131.

In this embodiment, by providing the fourth anti-rotation surface 225 on the third outer peripheral surface 223 of the first upper plastic member 20a, and the third anti-rotation surface 131 matching with the fourth anti-rotation surface 225 on the inner wall surface of the first terminal-post through-hole 13a, the third anti-rotation surface 131 can prevent the first upper plastic member 20a from rotating relative to the end cover 10, thereby improving the connection stability between the first upper plastic member 20a and the end cover 10, and increasing the torsional force between the first upper plastic member 20a and the end cover 10, so as to reduce or even prevent the first upper plastic member 20a from twisting relative to the end cover 10 when subjected to an external force, and thus further avoid the sealing failure of the first terminal post 40a. Specifically, the end cover assembly 1 provided in this embodiment increases the torsional force between the first upper plastic member 20a and the end cover 10, reduces or even prevents the first upper plastic member 20a from twisting relative to the end cover 10 when subjected to an external force, and prevents the first upper plastic member 20a from causing the first terminal post 40a to twist, thereby avoiding the sealing failure of the first terminal post 40a caused by welding failure between the first terminal post 40a and the first connector 70a.

Exemplarily, in this embodiment, when the electrical connecting piece 210 is poorly welded to the first terminal post 40a and the electrical connecting piece 210 needs to be disassembled, by providing the fourth anti-rotation surface 225 on the first upper plastic member 20a and the third anti-rotation surface 131 on the inner wall surface of the first terminal-post through-hole 13a, the end cover assembly 1 provided in this embodiment can prevent the electrical connecting piece 210 from causing the first upper plastic member 20a to rotate relative to the end cover 10 through the first terminal post 40a.

It can be noted that since the contour of the third outer peripheral surface 223 of the first upper plastic member 20a is non-circular and the first terminal-post through-hole 13a is non-cylindrical, when the first upper plastic member 20a is installed in the first terminal-post through-hole 13a, it is difficult to accurately align the first upper plastic member 20a in the first terminal-post through-hole 13a, thereby affecting the assembly efficiency.

In this embodiment, by providing the positioning surface 2131 on the second outer peripheral surface 213 of the first upper plastic member 20a, when the first upper plastic member 20a is installed in the first terminal-post through-hole 13a, the first upper plastic member 20a can be positioned, so that the first upper plastic member 20a can be quickly aligned with the first terminal-post through-hole 13a, ensuring that the positioning surface 2131 and the end cover 10 can be placed at a set angle, so that the first upper plastic member 20a can be successfully installed in the first terminal-post through-hole 13a of the end cover 10, and thus the assembly efficiency of the end cover assembly 1 and the battery cell 100 can be further improved.

Referring to FIGS. 6, 7 and 13, where FIG. 13 is a schematic structural diagram of the lower plastic member 30 in the battery cell 100 illustrated in FIG. 6.

The lower plastic member 30 defines a terminal-post hole 31, a second explosion-proof hole 32, a second liquid injection hole 33, and a flow guide hole 34. The second explosion-proof hole 32 extends through the lower plastic member 30 in the thickness direction of the lower plastic member 30. The second explosion-proof hole 32 is defined opposite to the first explosion-proof hole 14 in the end cover 10 and opposite to the explosion-proof valve 80. When the pressure inside the battery cell 100 is excessively high, pressure gas in the accommodating cavity 51 enters between the lower plastic member 30 and the explosion-proof valve 80 through the second explosion-proof hole 32, and then impacts the explosion-proof valve 80, so that the explosion-proof valve 80 opens to release pressure, thereby preventing the battery cell 100 from exploding and improving the safety performance of the battery cell 100 and the energy-storage apparatus 200.

The second liquid injection hole 33 extends through the lower plastic member 30 in the thickness direction of the lower plastic member 30 and is spaced apart from the second explosion-proof hole 32. The second liquid injection hole 33 is arranged opposite to and in communication with the first liquid injection hole 15 in the end cover 10, and the second liquid injection hole 33 is in communication with the accommodating cavity 51 of the housing 50. In the liquid injection process of the battery cell 100, the electrolyte flows into the accommodating cavity 51 of the housing 50 through the first liquid injection hole 15 and the second liquid injection hole 33, so as to immerse the electrode assembly 60.

The flow guide hole 34 extends through the lower plastic member 30 in the thickness direction of the lower plastic member 30 and is spaced apart from the second explosion-proof hole 32 and the second liquid injection hole 33. In this embodiment, there are multiple flow guide holes 34. The multiple flow guide holes 34 are defined at intervals in the lower plastic member 30. In this embodiment, by providing the flow guide holes 34 in the lower plastic member 30, the electrolyte flowing between the lower plastic member 30 and the end cover 10 during the liquid injection process of the battery cell 100 can flow into the accommodating cavity 51 through the flow guide holes 34, thereby improving the liquid injection speed, and preventing part of the electrolyte from staying on a top surface of the lower plastic member 30, avoiding waste of the electrolyte.

In this embodiment, there are two terminal-post holes 31, which are a first terminal-post hole 31a and a second terminal-post hole 31b respectively. Both the first terminal-post hole 31a and the second terminal-post hole 31b extend through the lower plastic member 30 in the thickness direction of the lower plastic member 30. The first terminal-post hole 31a is spaced apart from the second terminal-post hole 31b in the length direction of the lower plastic member 30, i.e., in the X direction, and the second explosion-proof hole 32, the second liquid injection hole 33, and the flow guide hole 34 are all defined between the first terminal-post hole 31a and the second terminal-post hole 31b. The first terminal-post hole 31a is used for the first upper plastic member 20a and the first terminal post 40a to pass through, and the second terminal-post hole 31b is used for the second upper plastic member 20b and the second terminal post 40b to pass through.

The shape of the first terminal-post hole 31a is non-cylindrical, and a contour of the first terminal-post hole 31a is consistent with or substantially the same as the contour of the third outer peripheral surface 223 of the first upper plastic member 20a. An inner wall surface of the first terminal-post hole 31a includes a fifth anti-rotation surface 311. The fifth anti-rotation surface 311 is a planar surface. That is, at least part of the inner wall surface of the first terminal-post hole 31a is a planar surface. In this embodiment, the fifth anti-rotation surfaces 311 is implemented as multiple fifth anti-rotation surfaces. The multiple fifth anti-rotation surfaces 311 are sequentially arranged and are connected end to end to form the inner wall surface of the first terminal-post hole 31a. It can be understood that the shape of the cross section of the first terminal-post hole 31a along the XY planar surface is a polygon, that is, a contour of the inner wall surface of the first terminal-post hole 31a is a polygon. Exemplarily, the number of the fifth anti-rotation surfaces 311 is six. The six fifth anti-rotation surfaces 311 are sequentially arranged and are connected end to end to form the inner wall surface of the first terminal-post hole 31a. That is, the shape of the cross section of the first terminal-post hole 31a along the XY planar surface is hexagonal. Specifically, the shape of the cross section of the first terminal-post hole 31a along the XY planar surface is a regular hexagon. That is, the contour of the inner wall surface of the first terminal-post hole 31a is a regular hexagon structure.

In some embodiments, the shape of the cross section of the first terminal-post hole 31a parallel to the XY planar surface may also be quadrilateral, pentagonal, heptagonal, octagonal, etc. Alternatively, the inner wall surface of the first terminal-post hole 31a may also be composed of an arc-shaped connecting curved surface and a planar fifth anti-rotation surface 311.

In some embodiments, the fifth anti-rotation surface 311 may also be a curved surface. Exemplarily, the inner wall surface of the first terminal-post hole 31a includes a connecting curved surface and a fifth anti-rotation surface 311 connected to each other, and the radius of curvature of the connecting curved surface is different from that of the fifth anti-rotation surface 311. Alternatively, the contour of the inner wall surface of the first terminal-post hole 31a may also be elliptical or special-shaped.

In this embodiment, the lower plastic member 30 is disposed at the bottom of the end cover 10 and stacked with the end cover 10 in the Z direction, and the lower plastic member 30 is fixedly connected to the end cover 10. Exemplarily, the lower plastic member 30 is provided with heat-melting columns at a surface of the lower plastic member 30 facing towards the end cover 10, and the heat-melting columns are heat-melted and connected to the bottom of the end cover 10. The first terminal-post hole 31a is located opposite to the first terminal-post through-hole 13a of the end cover 10 in the Z direction, and the protruding portion 22 of the first upper plastic member 20a is inserted through both the first terminal-post through-hole 13a and the first terminal-post hole 31a. The third outer peripheral surface 223 is disposed opposite to and parallel to the inner wall of the first terminal-post hole 31a, and the third outer peripheral surface 223 is in contact with the inner wall of the first terminal-post hole 31a. The fourth anti-rotation surface 225 is disposed parallel to and opposite to the fifth anti-rotation surface 311. Moreover, the fifth anti-rotation surface 311 and the fourth anti-rotation surface 225 restrain in the circumferential direction of the first upper plastic member 20a. Specifically, when there are multiple fourth anti-rotation surfaces 225 and multiple fifth anti-rotation surfaces 311, the multiple fourth anti-rotation surfaces 225 are disposed in one-to-one correspondence with the multiple fifth anti-rotation surfaces 311, and each fourth anti-rotation surface 225 is disposed parallel to and opposite to a corresponding fifth anti-rotation surface 311.

In this embodiment, the end cover assembly 1 further includes a sealing ring 90. The sealing ring 90 has an annular structure, and the sealing ring 90 is adapted to the first terminal-post hole 31a in shape. Specifically, the sealing ring 90 has a regular hexagonal structure. The sealing ring 90 is sleeved on the outer periphery of the protruding portion 22 and located between the third outer peripheral surface 223 and the inner wall of the first terminal-post hole 31a, so as to achieve sealing between the third outer peripheral surface 223 and the inner wall of the first terminal-post hole 31a, and further achieve sealing of the first terminal post 40a.

In this embodiment, by providing the fourth anti-rotation surface 225 on the first upper plastic member 20a and the fifth anti-rotation surface 311 matching the fourth anti-rotation surface 225 on the inner wall surface of the first terminal-post hole 31a of the lower plastic member 30, the fifth anti-rotation surface 311 can prevent the upper plastic member 20 from rotating relative to the lower plastic member 30, thereby improving the connection stability between the first upper plastic member 20a and the lower plastic member 30, that is, further improving the installation stability of the upper plastic member 20, and increasing the torsional force between the first upper plastic member 20a and the lower plastic member 30, so as to reduce or even prevent the first upper plastic member 20a from twisting relative to the lower plastic member 30 when subjected to an external force, and thus further avoid the sealing failure of the first terminal post 40a. Specifically, the end cover assembly 1 provided in this embodiment increases the torsional force between the first upper plastic member 20a and the lower plastic member 30, further reducing or even preventing the first upper plastic member 20a from twisting relative to the end cover 10 when subjected to an external force, and further preventing the first upper plastic member 20a from driving the first terminal post 40a to twist, thereby further avoiding the sealing failure of the first terminal post 40a caused by the welding failure between the first terminal post 40a and the first connector 70a.

Exemplarily, in this embodiment, when the electrical connecting piece 210 is poorly welded to the first terminal post 40a and the electrical connecting piece 210 needs to be disassembled, by providing the fourth anti-rotation surface 225 on the first upper plastic member 20a and the fifth anti-rotation surface 311 on the lower plastic member 30, the end cover assembly 1 provided in this embodiment can prevent the electrical connecting piece 210 from causing the first upper plastic member 20a to rotate relative to the lower plastic member 30 through the first terminal post 40a.

It can be understood that, in the end cover assembly 1 provided in this embodiment, the first upper plastic member 20a, the end cover 10, and the lower plastic member 30 can all limit the first terminal post 40a. When the first terminal post 40a is subjected to a torsional force, the first upper plastic member 20a, the end cover 10, and the lower plastic member 30 can simultaneously prevent the first terminal post 40a from rotating around its axial direction.

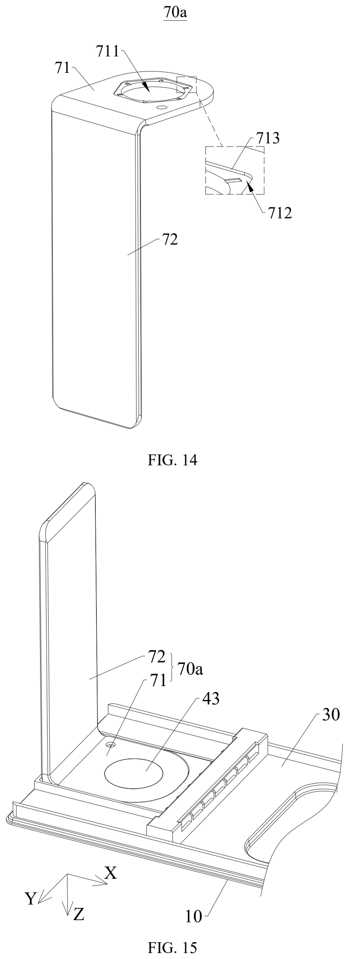

Reference is made to FIG. 14, which is a schematic structural diagram of the first connector 70a in the battery cell 100 illustrated in FIG. 6.

The first connector 70a includes a first connecting portion 71 and a second connecting portion 72. The first connecting portion 71 is connected to the second connecting portion 72 at an angle. In this embodiment, the first connecting portion 71 is vertically connected to the second connecting portion 72. In some other embodiments, the angle between the first connecting portion 71 and the second connecting portion 72 may be slightly greater than 90° or slightly less than 90°. The first connecting portion 71 defines a first connecting hole 711, and the first connecting hole 711 extends through the first connecting portion 71 in the thickness direction of the first connecting portion 71. In this embodiment, the first connecting hole 711 is a circular hole, and the first connecting hole 711 is adapted to the flange 43 in shape.

The first connecting portion 71 further defines a limiting groove 712 on a surface of the first connecting portion 71. The limiting groove 712 is defined around an outer periphery of the first connecting hole 711. An outer contour of the limiting groove 712 is consistent with or substantially the same as the outer contour of the protruding portion 22 of the first upper plastic member 20a. A side wall surface of the limiting groove 712 includes a sixth anti-rotation surface 713, and the sixth anti-rotation surface 713 is a planar surface. That is, at least part of the side wall surface of the limiting groove 712 is a planar surface. In this embodiment, the sixth anti-rotation surface 713 is implemented as multiple sixth anti-rotation surface 713, and the multiple sixth anti-rotation surfaces 713 are sequentially disposed and connected end to end to form the side wall surface of the limiting groove 712. It can be understood that the contour of the side wall surface of the limiting groove 712 is a polygon. Specifically, the contour of the side wall surface of the limiting groove 712 is a regular hexagon.

Reference is made to FIGS. 7 and 15, where FIG. 15 is a schematic structural diagram illustrating part of the battery cell 100 illustrated in FIG. 5, viewed from another direction.

The first connector 70a is mounted on one side of the lower plastic member 30 facing away from the end cover 10, and the first connecting portion 71 faces towards the lower plastic member 30 and is fixedly connected and electrically connected to the first terminal post 40a. Specifically, the first connecting portion 71 is fixedly connected to the first terminal post 40a by welding. The limiting groove 712 faces towards the lower plastic member 30, and at least part of the protruding portion 22 of the upper plastic member 20 is disposed in the limiting groove 712. Specifically, one end of the protruding portion 22 facing away from the body 21 is disposed in the limiting groove 712, and the third outer peripheral surface 223 is disposed opposite to and parallel to the side wall surface of the limiting groove 712. The sixth anti-rotation surface 713 is disposed parallel to and in contact with the fourth anti-rotation surface 225. Specifically, when there are multiple sixth anti-rotation surfaces 713 and multiple fourth anti-rotation surfaces 225, the multiple sixth anti-rotation surfaces 713 are disposed in one-to-one correspondence with the multiple fourth anti-rotation surfaces 225, and each sixth anti-rotation surface 713 is disposed parallel to and in contact with a corresponding fourth anti-rotation surface 225.

In this embodiment, by providing the sixth anti-rotation surface 713 on the side wall surface of the limiting groove 712, the sixth anti-rotation surface 713 can further prevent the first upper plastic member 20a from rotating, thereby further improving installation stability of the first upper plastic member 20a and further preventing the first terminal post 40a from causing the first upper plastic member 20a to rotate.

The flange 43 of the first terminal post 40a is inserted through the first connecting hole 711, and an outer peripheral surface of the flange 43 is electrically connected to the inner wall of the first connecting hole 711. Specifically, the outer peripheral surface of the flange 43 may be in direct contact with the inner wall of the first connecting hole 711, or may be fixedly connected and electrically connected by welding. In this way, stability of the electrical connection between the first connector 70a and the first terminal post 40a can be improved.

The second connecting portion 72 extends into the accommodating cavity 51 of the housing 50 and is fixedly connected and electrically connected to the positive tab of the electrode assembly 60. Current of the electrode assembly 60 flows to the second connecting portion 72 through the positive tab, then flows to the first connecting portion 71, and flows from the first connecting portion 71 to the outside of the battery cell 100 through the first terminal post 40a.

It may be noted that, in the related art, when the electrical connecting piece 210 is disassembled from the first terminal post 40a, the electrical connecting piece 210 may cause the first terminal post 40a to twist, which may cause relative rotation between the first terminal post 40a and the first connector 70a, thereby affecting welding effect and connection stability between the first terminal post 40a and the first connector 70a, further affecting stability of the electrical connection between the first terminal post 40a and the electrode assembly 60, and leading to sealing failure of the first terminal post 40a.

In the battery cell 100 provided in this embodiment, by providing the second anti-rotation surface 412 on the first terminal post 40a, and the first anti-rotation surface 224 on the first upper plastic member 20a, the torsional force between the first terminal post 40a and the first upper plastic member 20a is increased, so as to reduce or even prevent the first terminal post 40a from twisting relative to the first upper plastic member 20a when subjected to an external force. In this way, an impact on connection stability between the first terminal post 40a and the first connector 70a caused by rotation of the first terminal post 40a can be avoided, and an impact of the rotation of the first terminal post 40a on a welding effect and connection stability between the first connector 70a and the electrode assembly 60 can also be avoided. Thus, stability of the electrical connection between the first terminal post 40a, the first connector 70a, and the electrode assembly 60 can be improved, and the sealing failure of the first terminal post 40a can be avoided.

Reference is made to FIGS. 5 and 6, references of the structures and connection relationships of the second terminal post 40b, the second upper plastic member 20b, the second terminal-post through-hole 13b, the second terminal-post hole 31b, and the second connector 70b can all be made to the above descriptions, which will not be repeated here.

Specifically, the second upper plastic member 20b includes a body 21 and a protruding portion 22. The body 21 defines a first mounting through-hole 215, and the protruding portion 22 defines a second mounting through-hole 221. The protruding portion 22 is connected to the body 21 in the thickness direction of the end cover assembly 1, and the second mounting through-hole 221 is in communication with the first mounting through-hole 215. An inner wall surface of the second mounting through-hole 221 includes a first anti-rotation surface 224, and the first anti-rotation surface 224 is a planar surface. An outer peripheral surface of the body 21 includes a positioning surface 2131, and the positioning surface 2131 is a planar surface. The second terminal post 40b includes a cylinder 41 and a protrusion 42, the cylinder 41 and the protrusion 42 are connected in the thickness direction of the end cover assembly 1. An outer peripheral surface of the cylinder 41 includes a second anti-rotation surface 412, and the second anti-rotation surface 412 is a planar surface.

The second upper plastic member 20b is disposed on the end cover 10, the protruding portion 22 is inserted through the second terminal-post through-hole 13b and connected to the end cover 10, and the body 21 is disposed on the top surface 11 of the end cover 10. The second terminal post 40b is mounted on the second upper plastic member 20b, and the cylinder 41 is inserted through the second mounting through-hole 221. The second anti-rotation surface 412 is parallel to and in contact with the first anti-rotation surface 224. The protrusion 42 is inserted through the first mounting through-hole 215 and connected to the body 21.

In this embodiment, by providing the second anti-rotation surface 412 on the second terminal post 40b, and the first anti-rotation surface 224 matching with the second anti-rotation surface 412 on the second upper plastic member 20b, the second anti-rotation surface 412 of the second upper plastic member 20b can prevent the second terminal post 40b from rotating relative to the second upper plastic member 20b. In this way, connection stability between the second terminal post 40b and the second upper plastic member 20b can be improved, and a torsional force between the second terminal post 40b and the second upper plastic member 20b can be increased, so as to reduce or even prevent the second terminal post 40b from twisting relative to the second upper plastic member 20b when subjected to an external force, thereby avoiding the sealing failure of the second terminal post 40b caused by the welding failure between the second terminal post 40b and the second connector 70b.

Furthermore, in this embodiment, by providing the positioning surface 2131 on the second upper plastic member 20b, the electrical connecting piece 210 can also be positioned to ensure a connection angle and a connection position between the electrical connecting piece 210 and the second terminal post 40b, thereby improving the connection yield between the electrical connecting piece 210 and the second terminal post 40b.

The embodiments of the present disclosure have been described in detail above. Specific examples are used in the present disclosure to illustrate the principles and implementations of the present disclosure, and the descriptions of the above embodiments are only used to help understand the methods and core ideas of the present disclosure; at the same time, for those of ordinary skill in the art, according to the ideas of the present disclosure, there may be modifications in the specific implementations and application scopes. In conclusion, the content of this specification shall not be construed as a limitation to the present disclosure.

## Claims

1. An end cover assembly (1), comprising:
an end cover (10), the end cover (10) defining a terminal-post through-hole (13), and the terminal-post through-hole (13) extending through a top surface (11) of the end cover (10) and a bottom surface (12) of the end cover (10);
an upper plastic member (20), comprising a body (21) and a protruding portion (22), wherein the body (21) defines a first mounting through-hole (215), the protruding portion (22) defines a second mounting through-hole (221), the protruding portion (22) and the body (21) are connected in a thickness direction of the end cover assembly (1), and the second mounting through-hole (221) is in communication with the first mounting through-hole (215); an inner wall surface of the second mounting through-hole (221) comprises a first anti-rotation surface (224); an outer peripheral surface of the body (21) comprises a positioning surface (2131), and the positioning surface (2131) is a planar surface; the upper plastic member (20) is disposed on the end cover (10), the protruding portion (22) is inserted through the terminal-post through-hole (13), and the body (21) is disposed on the top surface (11) of the end cover (10); and
a terminal post (40), wherein the terminal post (40) comprises a cylinder (41) and a protrusion (42), the cylinder (41) and the protrusion (42) are connected in the thickness direction of the end cover assembly (1), and an outer peripheral surface of the cylinder (41) comprises a second anti-rotation surface (412); the terminal post (40) is mounted in the upper plastic member (20); the protrusion (42) is inserted through the first mounting through-hole (215), the cylinder (41) is inserted through the second mounting through-hole (221), the second anti-rotation surface (412) and the first anti-rotation surface (224) are in contact with each other, and the second anti-rotation surface (412) and the first anti-rotation surface (224) restrain in a circumferential direction of the terminal post (40).

2. The end cover assembly (1) according to claim 1, wherein the positioning surface (2131) is implemented as two positioning surfaces (2131), and the two positioning surfaces (2131) are parallel and opposite to each other;
the outer peripheral surface of the body (21) further comprises two connecting surfaces (2132), the two connecting surfaces (2132) each are a curved surface, and the two connecting surfaces (2132 are disposed opposite to each other and each are connected between the two positioning surfaces (2131).

3. The end cover assembly (1) according to claim 1 or 2, wherein the first anti-rotation surface (224) and the second anti-rotation surface (412) each are a planar surface, and the first anti-rotation surface (224) and the second anti-rotation surface (412) are disposed in parallel with each other.

4. The end cover assembly (1) according to any one of claims 1 to 3, wherein the first anti-rotation surface (224) is implemented as a plurality of first anti-rotation surfaces (224), and the plurality of first anti-rotation surfaces (224) are sequentially disposed and connected end to end to form an inner wall of the second mounting through-hole (221) and; the second anti-rotation surface (412) is implemented as a plurality of second anti-rotation surfaces (412), and the plurality of second anti-rotation surfaces (412) are sequentially disposed and are connected end to end to form an outer periphery of the cylinder (41); and
wherein the plurality of second anti-rotation surfaces (412) are disposed in one-to-one correspondence with the plurality of first anti-rotation surfaces (224), and each of the plurality of second anti-rotation surfaces (412) is disposed in parallel with and in contact with a corresponding first anti-rotation surface (224).

5. The end cover assembly (1) according to any one of claims 1 to 4, wherein a contour of the inner wall of the second mounting through-hole (221) is a regular hexagon, a contour of the outer peripheral surface of the cylinder (41) is a regular hexagon, and the contour of the outer peripheral surface of the cylinder (41) is consistent with the contour of the inner wall of the second mounting through-hole (221).

6. The end cover assembly (1) according to any one of claims 1 to 5, wherein an inner wall surface of the terminal-post through-hole (13) comprises a third anti-rotation surface (131), and the third anti-rotation surface (131) is a planar surface; and an outer peripheral surface of the protruding portion (22) comprises a fourth anti-rotation surface (225), the fourth anti-rotation surface (225) is a planar surface, and the fourth anti-rotation surface (225) is arranged parallel to the third anti-rotation surface (131) and is in contact with the third anti-rotation surface (131).

7. The end cover assembly (1) according to claim 6, wherein the third anti-rotation surface (131) is implemented as a plurality of third anti-rotation surfaces (131), and the plurality of third anti-rotation surfaces (131) are sequentially disposed and connected end to end to form an inner wall of the terminal-post through-hole (13); the fourth anti-rotation surface (225) is implemented as a plurality of fourth anti-rotation surfaces (225), and the plurality of fourth anti-rotation surfaces (225) are sequentially disposed and connected end to end to form an outer periphery of the protruding portion (22);
wherein the plurality of fourth anti-rotation surfaces (225) are disposed in one-to-one correspondence with the plurality of third anti-rotation surfaces (131), and each of the fourth anti-rotation surfaces (225) is disposed in parallel with and in contact with a corresponding third anti-rotation surface (131).

8. The end cover assembly (1) according to claim 6 or 7, wherein the end cover assembly (1) further comprises a lower plastic member (30), the lower plastic member (30) comprises a terminal-post hole (31), and the terminal-post hole (31) extends through the lower plastic member (30) in a thickness direction of the lower plastic member (30); and an inner wall surface of the terminal-post hole (31) comprises a fifth anti-rotation surface (311), and the fifth anti-rotation surface (311) is a planar surface;
wherein the lower plastic member (30) is disposed at a bottom of the end cover (10) and fixedly connected to the end cover (10), and the terminal-post hole (31) is arranged opposite to the terminal-post through-hole (13); and the protruding portion (22) is inserted through the terminal-post through-hole (13) and the terminal-post hole (31), and the fourth anti-rotation surface (225) is parallel to and opposite to the fifth anti-rotation surface (311).

9. The end cover assembly (1) according to claim 8, further comprising a sealing ring (90), wherein the sealing ring (90) is sleeved on an outer periphery of the protruding portion (22) and disposed in the terminal-post hole (31), and the sealing ring (90) is sealed between the protruding portion (22) and the lower plastic member (30).

10. A battery cell (100), comprising a housing (50), an electrode assembly (60), a connector (70), and the end cover assembly (1) according to any one of claims 1 to 9; wherein the housing (50) defines an opening (52) and an accommodating cavity (51), and the accommodating cavity (51) is in communication with the opening (52); the electrode assembly (60) is disposed in the accommodating cavity (51), and the end cover assembly (1) covers the opening (52) and is fixedly connected to the housing (50); and the connector (70) is electrically connected between the terminal post (40) and the electrode assembly (60).

11. The battery cell (100) according to claim 10, wherein the connector (70) comprises a first connecting portion (71) and a second connecting portion (72), and the first connecting portion (71) is connected to the second connecting portion (72) at an angle; the first connecting portion (71) defines a first connecting hole (711), and the first connecting hole (711) extends through the first connecting portion (71) in a thickness direction of the first connecting portion (71);
wherein the terminal post (40) further comprises a flange (43), and the flange (43) is connected to one side of the cylinder (41) facing away from the protrusion (42); the first connecting portion (71) is disposed at a bottom of the end cover (10), the flange (43) is inserted through the first connecting hole (711), and the flange (43) is in contact with an inner wall of the first connecting hole (711); and the second connecting portion (72) is electrically connected to the electrode assembly (60);
preferably, the first connecting portion (71) is welded to the flange (43).

12. The battery cell (100) according to claim 11, wherein the first connecting portion (71) defines a limiting groove (712) at a surface of the first connecting portion (71) facing towards the end cover (10), the limiting groove (712) is defined around an outer periphery of the first connecting hole (711), a side wall surface of the limiting groove (712) comprises a sixth anti-rotation surface (713), and the sixth anti-rotation surface (713) is a planar surface; and the protruding portion (22) is at least partially disposed in the limiting groove (712), and a fourth anti-rotation surface (225) disposed on an outer periphery of the protruding portion (22) is parallel to and in contact with the sixth anti-rotation surface (713).

13. An energy-storage apparatus (200), comprising an electrical connecting piece (210) and at least two battery cells (100) according to any one of claims 10 to 12, wherein the at least two battery cells (100) are arranged side by side, and the electrical connecting piece (210) is electrically connected between terminal posts (40) of two adjacent battery cells (100).

14. The energy-storage apparatus (200) according to claim 13, wherein at least one edge of the electrical connecting piece (210) is flush with the positioning surface (2131).

15. A power-consuming device (330), comprising the energy-storage apparatus (200) according to claim 13 or 14, wherein the energy-storage apparatus (200) is configured to supply power to the power-consuming device (330).
